# EUROPÄISCHE PATENTSCHRIFT

(11) **EP 0 646 499 B1**
(45) Veröffentlichungstag und Bekanntmachung des Hinweises auf die Patenterteilung: **08.04.1998**
(21) Anmeldenummer: 94115050.0
(22) Anmeldetag: 23.09.1994
(51) Int. Cl.: B60R 21/20

(54) **Instrumententafel in einem Kraftwagen**
Dash-board in a motor car
Tableau de bord dans une automobile

(30) Priorität: 29.09.1993 DE 4333135; 27.05.1994 DE 4418582
(43) Veröffentlichungstag der Anmeldung: 05.04.1995
(73) Patentinhaber: DAIMLER-BENZ AKTIENGESELLSCHAFT, 70567 Stuttgart (DE)
(72) Erfinder: Ball, Johannes, D-76751 Jockgrim (DE); Henseler, Wolfgang, D-71083 Herrenberg (DE); Gerstenberg, Uwe, D-76870 Kandel (DE); Fischer, Thomas, D-75365 Calw-Stammheim (DE)

(56) Entgegenhaltungen:
- WO-A-92/09458
- DE-C- 4 311 241
- PATENT ABSTRACTS OF JAPAN vol. 17, no. 610 (M-1508) 10. November 1993 & JP-A-05 185 894 (KANSEI CORP.) 27. Juli 1993

## Beschreibung

Die Erfindung betrifft eine Instrumententafel gemäß dem Oberbegriff des Anspruchs 1.

Aus der JP-A-51 85 894, die im Oberbegriff des Anspruchs 1 berücksichtigt ist, ist eine Instrumententafel mit einer starren Versteifungstafel, einer darüberliegenden Kunststoffschaumschicht und einer diese überziehenden Außenhaut bekannt, in welche ein Deckel integriert ist, der im Crash-Fall aufschwenkbar ist und eine Öffnung für den Durchtritt eines Gassacks freigibt. Der Deckel ist durch eine Trennfuge, die die Versteifungstafel, die Kunststoffschaumschicht und die Rückseite der Außenhaut durchtrennt, von der umgebenden Instrumententafel abgetrennt. Die Trennfuge ist dabei in ihrem Querschnitt in einem rechten Winkel zur Deckelerstreckung ausgerichtet, wodurch der Deckel, bei Belastung vom Fahrzeuginnenraum aus, leicht aus der Instrumententafelfläche herauszudrücken wäre. Um dies zu verhindern, sind hier zusätzlich ein Verbindungsscharnier und gegenüberliegend eine Stützplatte zwischen Deckel und Instrumententafel vorgesehen.

Aus der EP-A-0 465 869 A1 ist eine Instrumententafel in einem Kraftwagen bekannt, welche aus drei übereinanderliegenden Schichten aufgebaut ist. Innenliegend befindet sich eine starre Versteifungstafel, durch die die Form der Instrumententafel vorgegeben ist, auf der sich eine Kunststoffschaumschicht und darüber eine im Fahrzeuginnenraum sichtbare Außenhaut befindet. In die Instrumententafel ist ein Deckel integriert, der im Crash-Fall wegbewegt wird, indem ein sich entfaltender Gassack dagegendrückt. In abdeckender Position liegt der Deckel eben mit der umgebenden Instrumententafelfläche. Auch der Deckel weist unter der Hartschaumschicht eine plattenförmige Versteifung auf, welche als separates Teil ausgebildet in eine Öffnung der Versteifungstafel der umgebenden Instrumententafel eingefügt ist.

Die Aufgabe der Erfindung besteht darin, eine gattungsgemäße Instrumententafel im Deckelbereich kostengünstig stabiler auszuführen.

Die Aufgabe wird durch die kennzeichnenden Merkmale des Patentanspruchs 1 und durch die Verfahrensansprüche gelöst.

Die Instrumententafel, bei der der Versteifungsabschnitt des Deckels für die Gassackeinheit aus der umgebenden Versteifungstafel herausgetrennt ist, führt zu einer einfachen Fertigung der Instrumententafel. So kann die Instrumententafel komplett mit Versteifungstafel, Kunststoffschaumschicht und abdeckender Außenhaut hergestellt werden, wonach erst der Versteifungsabschnitt des Deckels durch spanende Verfahren oder Laser partiell oder komplett herausgetrennt werden kann, ohne dabei die Kunststoffschaumschicht zu durchbrechen, weshalb der Deckel hierdurch dann zum Fahrzeuginnenraum in geschlossener Position nicht sichtbar wäre. Die Herstellung der Instrumententafel für Fahrzeug mit und ohne Gassackeinbau bleibt damit bis zum letzten Bearbeitungsgang für die Variante mit Deckel gleich. Außerdem sind keine speziellen Formen für die Beschäumung einer Instrumententafel mit Deckel notwendig.

Bei einer Abtrennung des Versteifungsabschnitts des Deckels vor der Beschäumung ergibt sich gegenüber einem separat gefertigten und dann eingesetzten Teil der Vorteil, daß das für die Öffnung herausgearbeitete Material Verwendung findet, und dieser Deckel durch einen einfachen Fertigungsvorgang, wie z.B. Stanzen, im Normalfall gleichzeitig mit dem Randbeschnitt der ganzen Versteifungstafel, hergestellt werden kann.

Weitere Vorteile und Ausgestaltungen gehen aus der Beschreibung hervor.

Die Erfindung ist nachstehend anhand einer Zeichnung näher beschrieben.

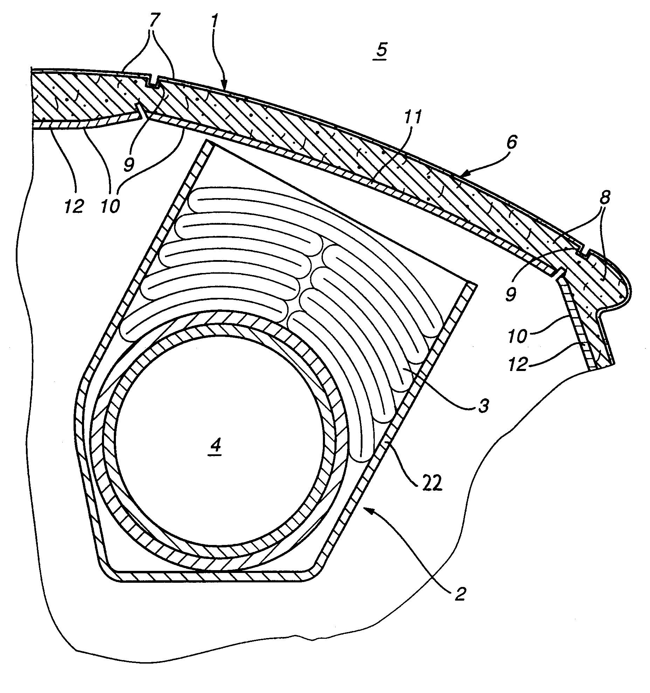

Die Figur zeigt in einem Schnitt von der Seite eine Instrumententafel 1 in einem nicht näher dargestellten Kraftwagen im Bereich einer hinter der Instrumententafel 1 liegenden Gassack-Einheit 2, deren eingefalteter Gassack 3 im Crash-Fall durch einen hier nur skizzierten Gasgenerator 4 befüllt und in Richtung eines Fahrzeuginsassen entfaltet wird. Hierzu drückt der Gassack 3 bei seiner Entfaltung in Richtung des Fahrzeuginnenraums 5 von hinten gegen die Instrumententafel 1. Diese weist deshalb einen Deckel 6 auf, der dabei weggedrückt wird und eine Öffnung für den sich entfaltenden Gassack 3 freigibt. Der Deckel 6 ist in die umgebende Fläche der Instrumententafel 1 integriert und weist gegen den Fahrzeuginnenraum 5 eine mit der umgebenden Instrumententafelfäche einteilige Außenhaut 7 auf. Unter dieser Außenhaut 7 liegt in der gesamten Instrumententafel 1 eine Kunststoffschaumschicht 8, die an der vorgesehenen Bruchstelle des Deckels 6 durch partielle oder umlaufende Einschnitte 9 geschwächt ist. In der gewünschten Form gestützt werden die stoßenergieabsorbierende Kunststoffschaumschicht 8 und ihre Außenhaut 7 durch eine Versteifungstafel 10. Diese Versteifungstafel 10 ist einteilig geformt, wonach entweder vor oder auch nach der Beschäumung mit der Kunststoffschaumschicht 8 der Versteifungsabschnitt 11 des Deckels 6 von der umgebenden Versteifungstafelfläche 12 abgetrennt wurde. Ein Abtrennen des Versteifungsabschnitts 11 nach der Beschäumung, z.B. durch spanende Bearbeitung oder durch Laser, bietet den Vorteil, daß die Instrumententafel 1 bis zu diesem Abtrennvorgang für Fahrzeuge mit oder ohne Gassack-Einheit 2 gleich gefertigt und damit auch in der selben Form beschäumt wird. Eine Abtrennung des Versteifungsabschnitts 11 vor der Beschäumung kann in einfacher Weise, z.B. durch Herausstanzen, erlangt werden. Damit der Schaum nicht in die entstandene. Versteifungstafelöffnung eintritt, wird dieser vorab abgetrennte Verteifungsabschnitt 11 dann zur Beschäumung lösbar durch Clipse o. ä. an der umgebenden Versteifungstafelfläche 12 festgelegt.

Vorteilhaft ist eine Abtrennung des Versteifungsabschnitts 11 des Deckels 6 mit einer Schnittführung in einem Winkel abweichend von einer senkrechten Ausrichtung zur Deckelerstreckung, da hierdurch die Belastbarkeit der Instrumententafel 1 bei einer üblichen Abstützung eines Insassen an der Instrumententafelfläche im Vergleich zu einem senkrechten Schnitt erhöht wird.

## Patentansprüche

1. Instrumententafel in einem Kraftwagen, mit einer innenliegenden, starren Versteifungstafel (10), einer darüberliegenden Kunststoffschaumschicht (8) und einer diese überziehenden Außenhaut (7), wobei in die Instrumententafel ein ebenfalls diesen Aufbau aufweisender Deckel (6), über einer Gassackeinheit liegend, integriert ist, der im Crash-Fall wegbewegbar ist und eine Öffnung freigibt, durch die hindurch die Entfaltung eines Gassacks (3) aus der Aufnahme (22) hinter der Instrumententafel ermöglicht ist, wobei ein Versteifungsabschnitt (11) des Deckels (6) in einem entlang der Kontur des Deckels von der Versteifungstafel abgetrennten Teil besteht,
**dadurch gekennzeichnet,**
daß der Verlauf der Trennfuge des Versteifungsabschnittes (11) des Deckels (6) im Querschnitt von einem rechten Winkel zur Deckelerstreckung abweicht, und hierdurch der Versteifungsabschnitt von außen belastbar ist.

2. Verfahren zur Herstellung einer Instrumententafel nach Anspruch 1,
**dadurch gekennzeichnet,**
daß der Versteifungsabschnitt (11) des Deckels (6) nach der Beschäumung der Versteifungstafel (10) abgetrennt wird.

3. Verfahren zur Herstellung einer Instrumententafel nach Anspruch 1,
**dadurch gekennzeichnet,**
daß der Versteifungsabschnitt (11) des Deckels (6) vor der Beschäumung der Versteifungstafel (10) abgetrennt wird und zur Beschäumung mit dieser durch lösbare Verbindungselemente verbunden wird.

## Claims

1. Instrument panel in a motor vehicle, having an interior, rigid reinforcement panel (10), a foamed-plastic layer (8) located thereabove and an outer skin (7) which covers said layer, a cover (6) which likewise exhibits this construction and lies above an airbag unit being integrated into the instrument panel, which cover, in the event of a crash, can move away and releases an opening through which an airbag (3) can unfold out of the receiving means (22) behind the instrument panel, a reinforcement portion (11) of the cover (6) comprising a part which is separated off from the reinforcement panel along the contour of the cover, characterized in that, in cross-section, the parting joint of the reinforcement portion (11) of the cover (6) runs at an angle other than 90° with respect to the extent of the cover and, as a result, the reinforcement portion can be subjected to loading from the outside.

2. Process for producing an instrument panel according to Claim 1, characterized in that the reinforcement portion (11) of the cover (6) is separated off after foaming of the reinforcement panel (10).

3. Process for producing an instrument panel according to Claim 1, characterized in that the reinforcement portion (11) of the cover (6) is separated off before foaming of the reinforcement panel (10) and, for the purpose of foaming, is connected to said panel by releasable connecting elements.

## Revendications

1. Tableau de bord dans un véhicule automobile, comprenant un panneau de renfort (10) rigide monté à l'intérieur, une couche (8) de mousse en matière synthétique appliquée par-dessus et une garniture extérieure (7) recouvrant ladite couche de matière synthétique où un couvercle (6), présentant également cette structure et placé au-dessus d'un ensemble formant un sac de gaz, est intégré au tableau de bord, lequel couvercle, en cas d'accident, est amovible et laisse le passage à une ouverture à travers laquelle le gonflement d'un sac de gaz (3) est possible à partir du logement (22) placé derrière le tableau de bord, où une partie (11) de renfort du couvercle (6) se compose, le long du contour du couvercle, d'une partie séparée du panneau de renfort,
caractérisé en ce que le profil du joint de séparation de la partie (11) de renfort du couvercle (6), en coupe, s'écarte d'un angle droit par rapport au profil du couvercle, la partie de renfort pouvant, de ce fait, être chargée de l'extérieur.

2. Procédé de fabrication d'un tableau de bord selon la revendication 1, caractérisé en ce que la partie (11) de renfort du couvercle (6) est séparée après l'application du revêtement en mousse sur le panneau de renfort (10).

3. Procédé de fabrication d'un tableau de bord selon la revendication 1, caractérisé en ce que la partie (11) de renfort du couvercle (6) est séparée avant l'application du revêtement en mousse sur le panneau de renfort (10) et que, pour l'application du revêtement en mousse, ladite partie de renfort est reliée audit panneau de renfort par des moyens de fixation amovibles.
